# FASCICULE DE BREVET EUROPEEN

(11) **EP 3 380 706 B1**
(45) Date de publication et mention de la délivrance du brevet: **25.12.2019**
(21) Numéro de dépôt: 16775772.3
(22) Date de dépôt: 05.09.2016
(51) Int. Cl.: F01L 1/02, F16H 7/18, F01L 1/348, F16H 7/08

(54) **SYSTEME DE DECALAGE EN ROTATION ENTRE DEUX ARBRES MONTES MOBILES EN ROTATION**
SYSTEM ZUR PHASENVERSTELLUNG ZWISCHEN ZWEI WELLEN, DIE BEIDE DREHBAR GELAGERT SIND
SYSTEM FOR CHANGING THE ROTATION PHASE BETWEEN TWO SHAFTS BOTH OF WHICH ARE ROTATABLY MOUNTED

(30) Priorité: 25.11.2015 FR 1561343
(43) Date de publication de la demande: 03.10.2018
(73) Titulaire: RENAULT s.a.s., 92100 Boulogne-Billancourt (FR)
(72) Inventeur: JUSTET, Frédéric, 91190 Gif-sur-Yvette (FR); TRIBOTTE, Pascal, 78000 Versailles (FR)
(86) Numéro de dépôt international: PCT/FR2016/052186
(87) Numéro de publication internationale: WO 2017/089662

(56) Documents cités:
- CH-A5- 651 109
- DE-A1- 3 904 696
- DE-A1- 4 041 785
- FR-A3- 2 979 946
- JP-U- S61 179 307
- US-A- 4 484 543
- US-A- 5 026 326
- US-A- 5 597 367
- US-A1- 2007 142 146

## Description

### Domaine technique de l'invention

L'invention concerne un système de décalage en rotation entre deux arbres montés mobiles en rotation, équipé d'un dispositif d'amortissement.

L'invention concerne plus particulièrement un système de décalage d'arbre à cames pour un moteur à combustion interne.

L'invention concerne également un moteur à combustion interne comportant un tel système de décalage d'arbre à cames.

### Etat de la Technique

Dans une configuration répandue des moteurs à combustion interne, une culasse est montée au dessus d'un carter cylindres qui loge un vilebrequin monté mobile en rotation autour d'un axe longitudinal du moteur. Le vilebrequin est entrainé en rotation par des mouvements de va-et-vient de pistons coulissant dans des cylindres et reliés au vilebrequin par des bielles. A une extrémité du vilebrequin, est disposée une roue dentée qui entraine à l'aide de moyens de transmission une seconde roue dentée aménagée en bout d'un arbre à cames monté mobile en rotation dans la culasse. La rotation de l'arbre à cames est liée à la rotation du vilebrequin. L'arbre à cames est aménagé pour entrainer en coulissement des soupapes positionnées au-dessus de chambres à combustion installées dans les cylindres. Lesdites soupapes sont destinées à l'ouverture de conduits de circulation de gaz pour l'admission de gaz dans les chambres à combustion ou pour l'échappement des gaz depuis lesdites chambres. Selon des modes de réalisation, on peut ainsi avoir des soupapes d'admission associées à des soupapes d'échappement, des soupapes d'échappement seules ou des soupapes d'admission seules, lesdites soupapes étant commandées par l'arbre à cames.

Par exemple, pour un moteur 4T (quatre temps), les soupapes d'admission sont ouvertes pour admettre de l'air dans les chambres à combustion puis refermées, cet air est mélangé avec du carburant et comprimé avant d'être brûlé. Les soupapes d'échappement sont alors ouvertes pour laisser s'échapper les gaz brûlés dans des conduits d'échappement.

Par exemple, pour certains moteurs 2T (deux temps) de l'air frais peut être admis depuis des ouvertures disposées dans le bas du cylindre entourant la chambre à combustion. L'air est ensuite mélangé avec du carburant et comprimé avant d'être brûlé et aspiré hors de la chambre de combustion par l'ouverture des conduits d'échappement.

Par exemple, pour d'autres moteurs 2T, la soupape peut commander l'ouverture d'admission de gaz dans la chambre. Les gaz sont mélangés avec du carburant et comprimés avant d'être aspirés hors de la chambre par l'ouverture de conduits d'échappement débouchant dans ladite chambre.

Pour améliorer l'efficacité du moteur, notamment pour optimiser les taux de gaz brûlés et la phase de balayage des gaz dans la chambre, les ouvertures des soupapes d'admission ou d'échappement peuvent fluctuer selon le régime ou la charge du moteur.

Selon les régimes du moteur, il peut être efficace de jouer sur le décalage de l'arbre à carnes en avance ou en retard par rapport à la rotation du vilebrequin.

On connait des systèmes de décalage en rotation d'arbre comprenant des moyens de déplacement de branches des moyens de transmission situées entre les deux roues dentées, ces moyens de déplacement permettant de régler l'écartement entre ces branches, tel que, par exemple, celui décrit dans le document FR 2 979 946. Toutefois, du fait du mouvement des soupapes et des acyclismes du vilebrequin, les moyens de transmission subissent des mouvements oscillatoires engendrant des efforts dynamiques importants sur les moyens de déplacement. Ces efforts dynamiques peuvent entrainer une dégradation du fonctionnement des moyens de déplacement, voire leur ruine.

### Bref résumé de l'invention

L'invention vise à pallier ces inconvénients en proposant un système de décalage en rotation d'arbres équipé d'un dispositif permettant de réduire les efforts dynamiques subis par les moyens de déplacement. L'invention est plus particulièrement destinée au décalage d'un arbre à came de moteur thermique, mais peut être appliquée à tout système de décalage en rotation d'arbres dont les moyens de déplacement subissent des efforts provenant des moyens de transmission.

Un premier objet de l'invention concerne un système de décalage en rotation entre deux arbres montés mobiles en rotation selon des axes sensiblement parallèles et reliés par des moyens de transmission entourant des roues dentées coplanaires portées chacune par un arbre, le système comprenant un dispositif de déplacement d'au moins une des branches des moyens de transmission situées entre les roues dentées, ce dispositif de déplacement étant conformé pour faire varier les positions des deux branches, ledit dispositif de déplacement comprenant :
- un premier élément d'appui mobile commandé, s'étendant entre les roues dentées et en appui contre une branche des moyens de transmission,
- un second élément d'appui mobile, s'étendant entre les roues dentées et en appui contre la deuxième branche des moyens de transmission,
- un élément d'actionnement commandant le déplacement dudit élément d'appui mobile commandé,
- un moyen élastique de maintien de tension des moyens de transmission.

Le déplacement de l'élément d'appui mobile commandé permet de régler la distance séparant les branches des moyens de transmission entre lesquelles il est disposé, et le décalage en rotation des arbres. Les efforts dynamiques engendrés par les moyens de transmissions sont dès lors transmis à la fois à l'élément d'appui mobile commandé et à son élément d'actionnement, lesquels peuvent être fragilisés par ces efforts.

Selon l'invention, le système comprend au moins deux éléments amortisseurs conformés pour réduire des efforts dynamiques subis par le dispositif de déplacement et engendrés par les moyens de transmission, dont au moins un élément amortisseur fixé au premier élément d'appui mobile et au moins un élément amortisseur fixé au second élément d'appui mobile (25).

Le dispositif de déplacement est ainsi moins sollicité de sorte que sa durée de vie est augmentée. Le fonctionnement du système de décalage s'en trouve amélioré, notamment par des temps de réponse plus courts du dispositif de déplacement.

Avantageusement, le moyen de maintien de tension peut être disposé entre les deux éléments d'appui mobile.

Avantageusement, le système peut comprendre en outre un élément amortisseur intégré à l'élément d'actionnement.

Selon l'invention, au moins un élément amortisseur peut être un élément amortisseur reliant un élément d'appui mobile à un point fixe.

Selon l'invention, le système peut comprendre au moins un couple d'éléments amortisseurs distincts choisis parmi :
- un élément amortisseur reliant les deux éléments d'appui mobiles,
- un élément amortisseur reliant le premier élément d'appui mobile à un point fixe,
- un élément amortisseur reliant le second élément d'appui mobile à un point fixe.

Un tel agencement permet d'améliorer encore la réduction des efforts subis par le dispositif de déplacement, et en particulier d'améliorer le temps de réponse de l'élément d'actionnement.

Les premier et second éléments d'appui peuvent avantageusement être montés mobiles en rotation.

Lorsque l'élément d'appui commandé est monté mobile en rotation, le système de décalage peut comprendre un, notamment un ou plusieurs, élément amortisseur reliant l'élément d'appui mobile commandé à un point fixe choisi parmi :
- un élément amortisseur rotatif placé au point de rotation dudit élément d'appui mobile commandé et reliant ce dernier à un point fixe, et
- un élément amortisseur linéaire placé à distance du point de rotation dudit élément d'appui mobile et reliant ce dernier à un point fixe, ledit élément amortisseur linéaire travaillant en compression et/ou en extension suivant une direction linéaire prédéterminée

En variante ou en combinaison, au moins un élément amortisseur est un élément amortisseur linéaire travaillant en compression et/ou en extension suivant une direction linéaire prédéterminée.

Avantageusement, le premier élément d'appui mobile commandé et le second élément d'appui mobile peuvent être montés mobiles en rotation autour d'axes sensiblement parallèles. Dans ce cas, les deux axes de rotation des éléments d'appui mobile peuvent avantageusement être disposés à proximité d'une même roue dentée.

Le système de décalage selon l'invention est adapté pour tout ensemble d'arbres rotatifs, dont un arbre entraine en rotation l'autre arbre via les moyens de transmission.

Selon un mode de réalisation particulier, l'un des arbres du système de décalage selon l'invention est un arbre à cames commandant le déplacement des soupapes d'un moteur à combustion interne et l'autre arbre est un vilebrequin dudit moteur.

L'invention concerne également un moteur à combustion interne de véhicule automobile comprenant un système de décalage selon l'invention.

### Brève description des figures

L'invention est maintenant décrite en référence aux dessins annexés, non limitatifs, dans lesquels :
- la figure 1 est un schéma de profil d'un moteur à combustion ;
- la figure 2 est une représentation en perspective d'un système de décalage selon un example comparatif avec seulement un élément amortisseur ;
- la figure 3 est une représentation schématique de face d'un système de décalage selon un autre mode de réalisation de l'invention ;
- la figure 4 est une représentation schématique de face d'un système de décalage selon encore un autre mode de réalisation de l'invention.

### Description détaillée des figures

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

Les descriptions qui suivent se réfèrent à l'axe longitudinal X du vilebrequin, transversal Y et vertical Z.

Dans les figures, les mêmes éléments représentés gardent les mêmes références.

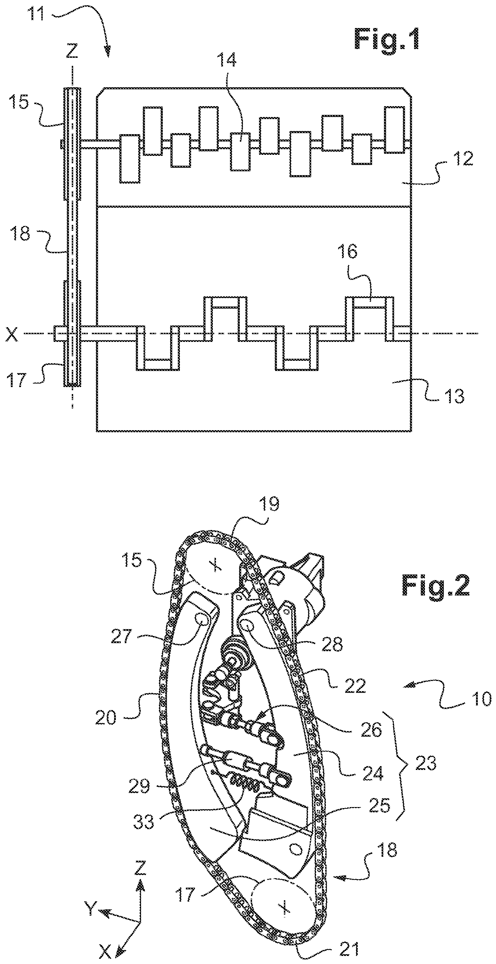

Selon la figure 1, un moteur à combustion interne 11 comprend une culasse 12 montée au-dessus d'un carter cylindres 13.

Dans le carter cylindres 13, un vilebrequin 16 est monté mobile en rotation autour d'un axe X. Une roue dentée 17 est montée solidaire du vilebrequin 16 à une extrémité de celui-ci.

Dans la culasse 12, un arbre à cames 14 est monté mobile en rotation autour d'un axe parallèle à l'axe longitudinal X du vilebrequin 16. Une roue dentée 15 est montée solidaire de l'arbre à cames 14, à une extrémité de ce dernier. La roue dentée 15 et la roue dentée 17 solidaire du vilebrequin sont sensiblement coplanaires, situées sensiblement dans un plan YZ orthogonal à l'axe longitudinal X.

Des moyens de transmission de distribution 18 entourent les deux roues dentées 15, 17, grâce à quoi le mouvement de rotation du vilebrequin 16 est transmis à l'arbre à cames 14. Les diamètres des deux roues dentées 15, 17 sont égaux dans les modes de réalisation présentés afin de simplifier la description, mais ils pourraient être différents. Tel que visible sur les figures 2 à 4, les moyens de transmission 18 entourant les deux roues dentées 15, 17 (représentées en pointillés sur la figure 2) comprennent une zone 19 en contact avec la roue dentée 15 solidaire de l'arbre à cames 14, une première branche 20, une zone de contact 21 avec la roue dentée 17 solidaire du vilebrequin 16 et une deuxième branche 22. Les deux branches 20, 22 des moyens de transmission 18 sont en conséquence écartées par la configuration.

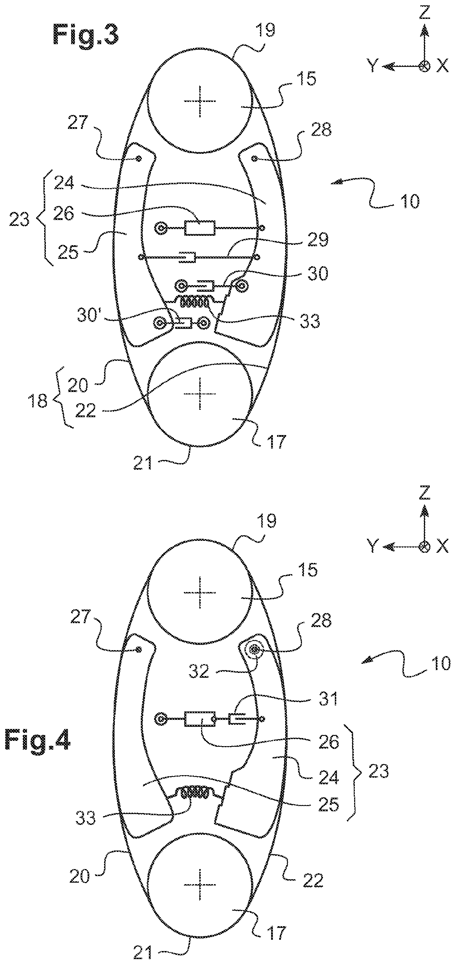

Dans les figures 2 et 3, un système de décalage 10 comprend un dispositif de déplacement 23 d'au moins une des deux branches 20, 22. Ce déplacement d'au moins une des branches est réalisé dans le plan des roues dentées 15, 17, à savoir dans le plan YZ, ici sensiblement dans la direction de l'axe transversal Y. Le dispositif de déplacement 23 permet ainsi de faire varier la les positions des deux branches 20, 22 et par conséquent le décalage en rotation du vilebrequin 16 et de l'arbre à cames 14.

Selon l'invention, le système de décalage 10 comprend au moins deux éléments amortisseurs conformés chacun pour réduire des efforts dynamiques subis par le dispositif de déplacement 23, et engendrés par les moyens de transmission 18. Plus précisément, au moins un élément amortisseur est fixé sur chacun des deux éléments d'appui mobiles 24, 25 décrits ci-après.

Dans les figures 2 à 4, le dispositif de déplacement 23 comprend un élément d'appui mobile commandé 24, s'étendant entre les roues dentées et en appui contre l'une de ses branches 20, 22 des moyens de transmission, ici la branche 22. Le dispositif de déplacement 23 comprend en outre un élément d'appui mobile 25 s'étendant également entre les roues dentées mais en appui contre l'autre branche 20 des moyens de transmission.

Dans la figure 2, les éléments d'appui mobiles 24 et 25 se présentent sous la forme de patins en appui sur les branches 20, 22, sur la majeure partie de la longueur de ces branches. Chacun de ces éléments d'appui mobiles 24, 25 est monté à rotation sur le carter du moteur, autour d'axes de rotation 28, 27 sensiblement parallèles, respectivement. De manière préférentielle, lesdits axes de rotation sont disposés à proximité d'une même roue dentée, par exemple la roue dentée 15 solidaire de l'arbre à cames.

Ce deuxième élément d'appui mobile 25 maintient les moyens de transmission 18 en tension, il est dit « tendeur ». Autrement dit, cet élément 25 d'appui mobile joue le rôle d'un galet tendeur. L'élément d'appui mobile 25 peut ainsi être équipé d'un moyen de maintien en tension, tel qu'un ressort, apte à l'appliquer contre la branche 20.

Le dispositif de déplacement 23 peut ainsi comprendre un moyen de maintien en tension 33 des moyens de transmissions. Ledit moyen de maintien présente une caractéristique élastique et peut comporter selon un mode de réalisation un ressort destiné à pousser dans le plan des roues dentées sur les moyens de transmission. Selon les figures 2, 3 et 4, ledit moyen de maintien en tension est disposé de manière préférentielle entre les deux éléments d'appui 24, 25 mobiles afin de maintenir un écartement sensiblement constant entre les deux éléments d'appui mobiles.

Ce moyen de maintien en tension 33 peut également présenter une fonction d'amortisseur et former un élément amortisseur au sens de l'invention.

Le dispositif de déplacement 23 comprend en outre un élément d'actionnement 26, commandant le déplacement de l'élément d'appui mobile commandé 24. Dans l'exemple représenté, cet élément d'actionnement 26 est solidaire à l'une de ses extrémités d'un élément fixe, ici le carter moteur, et à l'autre de ses extrémités à l'élément d'appui mobile commandé 24. Il est agencé de manière à déplacer ce dernier suivant l'axe transversal Y. L'invention n'est toutefois pas limitée à une réalisation ou une position particulière de l'élément d'actionnement 26.

On notera que sur la figure 2, l'élément d'actionnement 26 est relié sensiblement au milieu de l'élément 24 d'appui mobile commandé, suivant l'axe vertical Z. Le dispositif n'est toutefois pas limitée à une forme particulière des éléments 24, 25 d'appui mobiles, ni à leur nombre, ni à une position particulière de l'élément d'actionnement 26, pourvu que les éléments 24, 25 d'appui mobiles permettent d'écarter les branches 20, 22 des moyens de transmission 18.

Dans le mode de réalisation représenté sur la figure 2, un élément amortisseur 29 relie les deux éléments 24, 25 d'appui mobiles.

Dans le mode de réalisation représenté sur la figure 3, le système de décalage 10 comprend un élément amortisseur 29 qui relie les deux éléments d'appui mobiles 24, 25, mais aussi un élément amortisseur 30 disposé entre l'élément d'appui mobile commandé 24 et un point fixe du système de décalage 10, par exemple ici le carter. Le mode de réalisation de la figure 3 comprend deux éléments amortisseurs 29, 30 favorisant ainsi la réduction des efforts dynamiques subis par les éléments d'appui mobiles 24, 25, mais subis également par l'élément d'actionnement 26.

En variante, le deuxième élément amortisseur pourrait être disposé entre l'élément d'appui mobile tendeur 25 et un point fixe du moteur (par exemple le carter), tel que désigné par la référence 30' sur la figure 3.

Dans le mode de réalisation représenté figure 4, l'élément d'actionnement 26 comprend un élément amortisseur 31. Autrement dit cet élément amortisseur 31 est intégré à l'élément d'actionnement 26. Dans cet exemple, il s'agit d'un élément amortisseur 31 linéaire, à savoir travaillant en compression et/ou en extension suivant une direction prédéterminée, par exemple ici suivant l'axe transversal Y suivant la direction duquel l'élément 26 d'actionnement déplace l'élément d'appui mobile commandé 24.

Dans le mode de réalisation représenté figure 4, un élément amortisseur rotatif 32 est en outre disposé au point de rotation de l'élément d'appui mobile commandé 24 et relie ce dernier à un point fixe de système de décalage 10, par exemple ici le carter moteur. Cet élément d'amortissement rotatif 32, par exemple de type ressort, présente par exemple un couple prédéterminé dans au moins un sens de rotation, de préférence dans les deux sens de rotation. On dit alors qu'il est bidirectionnel.

Selon l'invention, deux éléments amortisseurs sont disposés afin de réduire les efforts subis par les moyens de transmission 18, lesdits éléments amortisseurs sont distincts et choisis parmi :
- un élément amortisseur (29) reliant les deux éléments d'appui mobiles (24, 25),
- un élément amortisseur (30, 32) reliant l'élément d'appui mobile commandé (24) à un point fixe,
- un élément amortisseur (30') reliant l'autre élément d'appui mobile (25) à un point fixe.

Le système de décalage peut par exemple comporter un couple d'éléments amortisseurs comprenant un élément amortisseur (29) reliant les deux éléments d'appui mobiles (24, 25) et un élément amortisseur (30, 32) reliant l'élément d'appui mobile commandé (24) à un point fixe.

Le système de décalage 10 selon l'invention permet ainsi d'utiliser un élément d'actionnement 26 de résistance habituelle et de réduire les mouvements dynamiques des moyens de transmission 18. En outre, on observe une usure réduite de l'élément d'actionnement 26 ainsi que des éléments d'appui mobiles 24, 25, mais aussi des moyens de transmission 18.

## Revendications

1. Système (10) de décalage en rotation entre deux arbres (14, 16) montés mobiles en rotation selon des axes sensiblement parallèles et reliés par des moyens de transmission (18) entourant des roues dentées (15, 17) coplanaires portées chacune par un arbre (14, 16), le système (10) comprenant un dispositif de déplacement (23) d'au moins une des branches (20, 22) des moyens de transmission (18) situées entre les roues dentées, ce dispositif de déplacement (23) étant conformé pour faire varier les positions des deux branches (20, 22), ledit dispositif de déplacement (23) comprenant :
- un premier élément d'appui mobile commandé (24), s'étendant entre les roues dentées et en appui contre une branche (22) des moyens de transmission (18),
- un second élément d'appui mobile (25), s'étendant entre les roues dentées et en appui contre la deuxième branche (20) des moyens de transmission (18),
- un élément d'actionnement (26) commandant le déplacement dudit élément d'appui mobile commandé (24),
- un moyen élastique de maintien de tension (33) des moyens de transmission,
**caractérisé en ce que** le système (10) comprend au moins deux éléments amortisseurs (29, 30, 30', 31, 32) conformés pour réduire des efforts dynamiques subis par le dispositif de déplacement (23) et engendrés par les moyens de transmission (18), dont au moins un élément amortisseur fixé au premier élément d'appui mobile (24) et au moins un élément amortisseur fixé au second élément d'appui mobile (25), au moins un élément amortisseur est un élément amortisseur (30, 32) reliant un élément d'appui mobile (24, 25) à un point fixe.

2. Système (10) de décalage selon la revendication 1, **caractérisé en ce que** le système comprend un élément amortisseur (31) intégré à l'élément d'actionnement (26).

3. Système (10) de décalage selon la revendication 1 ou 2, **caractérisé en ce que** le moyen de maintien de tension (33) est disposé entre les deux éléments d'appui mobile (24, 25).

4. Système (10) de décalage selon l'une quelconque des revendications 1 à 3, **caractérisé en ce qu'**il comprend au moins un couple d'éléments amortisseurs distincts choisis parmi :
- un élément amortisseur (29) reliant les deux éléments d'appui mobiles (24, 25),
- un élément amortisseur (30, 32) reliant le premier élément d'appui mobile (24) à un point fixe,
- un élément amortisseur (30') reliant le second élément d'appui mobile (25) à un point fixe.

5. Système (10) de décalage selon l'une quelconque des revendications 1 à 4, **caractérisé en ce que** le premier élément d'appui mobile (24) est monté mobile en rotation et **en ce qu'**un élément amortisseur relie l'élément d'appui mobile commandé (24) à un point fixe et est choisi parmi :
- un élément amortisseur rotatif (32) placé au point de rotation (28) dudit premier élément d'appui mobile (24) et reliant ce dernier à un point fixe, et
- un élément amortisseur linéaire (30) placé à distance du point de rotation dudit premier élément d'appui mobile (24) et reliant ce dernier à un point fixe, ledit élément amortisseur linéaire (30) travaillant en compression et/ou en extension suivant une direction linéaire prédéterminée.

6. Système (10) de décalage selon l'une quelconque des revendications 1 à 5, **caractérisé en ce que** le premier élément d'appui mobile commandé (24) et le second élément d'appui mobile (25) sont montés mobiles en rotation autour d'axes (27, 28) sensiblement parallèles.

7. Système (10) de décalage selon la revendication 6, **caractérisé en ce que** les deux axes de rotation (27, 28) des éléments d'appui mobile (24, 25) sont disposés à proximité d'une même roue dentée.

8. Système (10) de décalage selon l'une quelconque des revendications 1 à 7, **caractérisé en ce qu'**au moins un élément amortisseur (30, 31) est un élément amortisseur linéaire travaillant en compression et/ou en extension suivant une direction linéaire prédéterminée.

9. Système (10) de décalage selon l'une quelconque des revendications 1 à 8, **caractérisé en ce que** l'un des arbres est un arbre à cames (14) commandant le déplacement des soupapes d'un moteur à combustion interne (11) et **en ce que** l'autre arbre est un vilebrequin (16) dudit moteur.

10. Moteur à combustion interne (11) de véhicule automobile comprenant un système (10) de décalage selon la revendication 9.

## Patentansprüche

1. Drehversatzsystem (10) zwischen zwei Wellen (14, 16), die gemäß im Wesentlichen parallelen Achsen beweglich montiert und durch Übertragungseinrichtungen (18) verbunden sind, die koplanare Zahnräder (15, 17) umgeben, die je von einer Welle (14, 16) getragen werden, wobei das System (10) eine Verschiebevorrichtung (23) mindestens eines der Zweige (20, 22) der Übertragungseinrichtungen (18) enthält, die sich zwischen den Zahnrädern befinden, wobei diese Verschiebeeinrichtung (23) gestaltet ist, um die Stellungen der zwei Zweige (20, 22) zu verändern, wobei die Verschiebevorrichtung (23) enthält:
- ein gesteuertes bewegliches erstes Auflageelement (24), das sich zwischen den Zahnrädern erstreckt und gegen einen Zweig (22) der Übertragungseinrichtungen (18) anliegt,
- ein zweites bewegliches Auflageelement (25), das sich zwischen den Zahnrädern erstreckt und gegen den zweiten Zweig (20) der Übertragungseinrichtungen (18) anliegt,
- ein Betätigungselement (26), das die Verschiebung des gesteuerten beweglichen Auflageelements (24) steuert,
- eine elastische Spannungshalteeinrichtung (33) der Übertragungseinrichtungen,
**dadurch gekennzeichnet, dass** das System (10) mindestens zwei Dämpfungselemente (29, 30, 30', 31, 32) enthält, die gestaltet sind, um dynamische Kräfte zu verringern, die von der Verschiebevorrichtung (23) erfahren und von den Übertragungseinrichtungen (18) erzeugt werden, darunter mindestens ein am ersten beweglichen Auflageelement (24) befestigtes Dämpfungselement und mindestens ein am zweiten beweglichen Auflageelement (25) befestigtes Dämpfungselement, wobei mindestens ein Dämpfungselement ein Dämpfungselement (30, 32) ist, das ein bewegliches Auflageelement (24, 25) mit einem ortsfesten Punkt verbindet.

2. Versatzsystem (10) nach Anspruch 1, **dadurch gekennzeichnet, dass** das System ein Dämpfungselement (31) enthält, das in das Betätigungselement (26) integriert ist.

3. Versatzsystem (10) nach Anspruch 1 oder 2, **dadurch gekennzeichnet, dass** die Spannungshalteeinrichtung (33) zwischen den zwei beweglichen Auflageelementen (24, 25) angeordnet ist.

4. Versatzsystem (10) nach einem der Ansprüche 1 bis 3, **dadurch gekennzeichnet, dass** es mindestens ein Paar von unterschiedlichen Dämpfungselementen enthält, die ausgewählt werden unter:
- einem Dämpfungselement (29), das die zwei beweglichen Auflageelemente (24, 25) verbindet,
- einem Dämpfungselement (30, 32), das das erste bewegliche Auflageelement (24) mit einem ortsfesten Punkt verbindet,
- einem Dämpfungselement (30'), das das zweite bewegliche Auflageelement (25) mit einem ortsfesten Punkt verbindet.

5. Versatzsystem (10) nach einem der Ansprüche 1 bis 4, **dadurch gekennzeichnet, dass** das erste bewegliche Auflageelement (24) drehbeweglich montiert ist, und dass ein Dämpfungselement das gesteuerte bewegliche Auflageelement (24) mit einem ortsfesten Punkt verbindet und ausgewählt wird unter:
- einem drehenden Dämpfungselement (32), das am Drehpunkt (28) des ersten beweglichen Auflageelements (24) platziert ist und letzteres mit einem ortsfesten Punkt verbindet, und
- einem linearen Dämpfungselement (30), das in Abstand zum Drehpunkt des ersten beweglichen Auflageelements (24) platziert ist und letzteres mit einem ortsfesten Punkt verbindet, wobei das lineare Dämpfungselement (30) mit Druck und/oder Dehnung gemäß einer vorbestimmten linearen Richtung arbeitet.

6. Versatzsystem (10) nach einem der Ansprüche 1 bis 5, **dadurch gekennzeichnet, dass** das erste gesteuerte bewegliche Auflageelement (24) und das zweite bewegliche Auflageelement (25) drehbeweglich um im Wesentlichen parallele Achsen (27, 28) montiert sind.

7. Versatzsystem (10) nach Anspruch 6, **dadurch gekennzeichnet, dass** die zwei Drehachsen (27, 28) der beweglichen Auflageelemente (24, 25) in der Nähe des gleichen Zahnrads angeordnet sind.

8. Versatzsystem (10) nach einem der Ansprüche 1 bis 7, **dadurch gekennzeichnet, dass** mindestens ein Dämpfungselement (30, 31) ein lineares Dämpfungselement ist, das mit Druck und/oder Dehnung gemäß einer vorbestimmten linearen Richtung arbeitet.

9. Versatzsystem (10) nach einem der Ansprüche 1 bis 8, **dadurch gekennzeichnet, dass** eine der Wellen eine Nockenwelle (14) ist, die die Verschiebung der Ventile eines Verbrennungsmotors (11) steuert, und dass die andere Welle eine Kurbelwelle (16) des Motors ist.

10. Verbrennungsmotor (11) eines Kraftfahrzeugs, der ein Versatzsystem (10) nach Anspruch 9 enthält.

## Claims

1. System (10) for offsetting the rotation of two shafts (14, 16) mounted rotatably about substantially parallel axes and connected by transmission means (18) wrapping around coplanar toothed wheels (15, 17) each borne by a shaft (14, 16), the system (10) comprising a movement device (23) for moving at least one of the branches (20, 22) of the transmission means (18) that are situated between the toothed wheels, this movement device (23) being configured to vary the positions of the two branches (20, 22), said movement device (23) comprising:
- a first controlled movable pressing element (24) extending between the toothed wheels and pressing against a branch (22) of the transmission means (18),
- a second movable pressing element (25) extending between the toothed wheels and pressing against the second branch (20) of the transmission means (18),
- an actuating element (26) controlling the movement of said controlled movable pressing element (24),
- an elastic means (33) for maintaining the tension of the transmission means,
**characterized in that** the system (10) comprises at least two damping elements (29, 30, 30', 31, 32) configured to reduce dynamic forces experienced by the movement device (23) and generated by the transmission means (18), with at least one damping element fixed to the first movable pressing element (24) and at least one damping element fixed to the second movable pressing element (25), at least one damping element being a damping element (30, 32) connecting a movable pressing element (24, 25) to a fixed point.

2. Offsetting system (10) according to Claim 1, **characterized in that** the system comprises a damping element (31) integrated into the actuating element (26) .

3. Offsetting system (10) according to Claim 1 or 2, **characterized in that** the tension-maintaining means (33) is arranged between the two movable pressing elements (24, 25).

4. Offsetting system (10) according to any one of Claims 1 to 3, **characterized in that** it comprises at least one pair of separate damping elements chosen among:
- a damping element (29) connecting the two movable pressing elements (24, 25),
- a damping element (30, 32) connecting the first movable pressing element (24) to a fixed point,
- a damping element (30') connecting the second movable pressing element (25) to a fixed point.

5. Offsetting system (10) according to any one of Claims 1 to 4, **characterized in that** the first movable pressing element (24) is mounted rotatably, and **in that** a damping element connects the controlled movable pressing element (24) to a fixed point and is chosen among:
- a rotary damping element (32) placed at the point of rotation (28) of said first movable pressing element (24) and connecting the latter to a fixed point, and
- a linear damping element (30) placed at a distance from the point of rotation of said first movable pressing element (24) and connecting the latter to a fixed point, said linear damping element (30) working in compression and/or in extension in a predetermined linear direction.

6. Offsetting system (10) according to any one of Claims 1 to 5, **characterized in that** the first controlled movable pressing element (24) and the second movable pressing element (25) are mounted rotatably about substantially parallel axes (27, 28).

7. Offsetting system (10) according to Claim 6, **characterized in that** the two axes of rotation (27, 28) of the movable pressing elements (24, 25) are arranged in the vicinity of one and the same toothed wheel.

8. Offsetting system (10) according to any one of Claims 1 to 7, **characterized in that** at least one damping element (30, 31) is a linear damping element working in compression and/or in extension in a predetermined linear direction.

9. Offsetting system (10) according to any one of Claims 1 to 8, **characterized in that** one of the shafts is a camshaft (14) controlling the movement of the valves of an internal combustion engine (11), and **in that** the other shaft is a crankshaft (16) of said engine.

10. Motor vehicle internal combustion engine (11) comprising an offsetting system (10) according to Claim 9.
